(19) Europäisches Patentamt
European Patent Office
Office européen des brevets

(11) EP 1 253 728 A1

(12) EUROPEAN PATENT APPLICATION
published in accordance with Art. 158(3) EPC

(43) Date of publication:
30.10.2002 Bulletin 2002/44

(21) Application number: 00987660.8

(22) Date of filing: 20.12.2000

(51) Int Cl.$^7$: H04B 7/15

(86) International application number:
PCT/JP00/09051

(87) International publication number:
WO 02/051036 (27.06.2002 Gazette 2002/26)

(84) Designated Contracting States:
AT BE CH CY DE DK ES FI FR GB GR IE IT LI LU MC NL PT SE TR

(71) Applicant: MITSUBISHI DENKI KABUSHIKI KAISHA
Tokyo 100-8310 (JP)

(72) Inventor: YAMADA, Yoshiko,
Mitsubishi Denki K.K.
Tokyo 100-8310 (JP)

(74) Representative: Popp, Eugen, Dr. et al
MEISSNER, BOLTE & PARTNER
Postfach 86 06 24
81633 München (DE)

# (54) COMMUNICATION SATELLITE/LAND CIRCUITS SELECTION COMMUNICATIONS SYSTEM

(57) There is provided a selective communication system of communications satellite / terrestrial lines in which three types of terminals of terrestrial terminals having interface only for terrestrial system, satellite terminals having interface only for terrestrial system and satellite / terrestrial terminals having both interfaces for satellite system and terrestrial system are available and allows a group broadcast communication and selection of transmission route for broadcast communication in consideration of not only transmission time but also communication cost and the quality of lines. The system has a structure including above three kinds of terminals, and selects and changes transmission route based on destination included in the output signal, identifying information whether it is broadcast communication or one-to-one communication, and predetermined judgment condition for transmission route when data are transmitted from switchboard to these terminals.

FIG.3

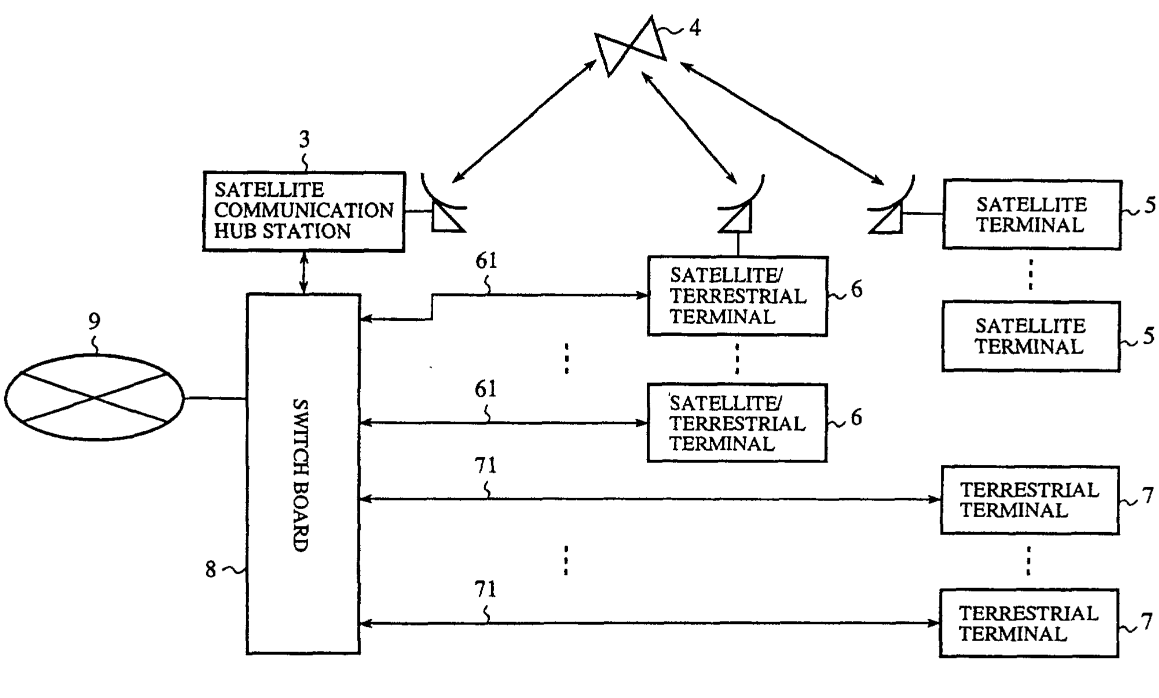




Printed by Jouve, 75001 PARIS (FR)

## Description

### Technical Field

The present invention relates to a hybrid system of satellite communication and terrestrial line communication by VSAT (Very Small Aperture Terminal) or USAT (Ultra Small Aperture Terminal), and more particularly to a selective communication system of communications satellite / terrestrial lines, which is capable of selecting a transmission route of broadcast information depending on conditions.

### Background Art

Fig. 1 is a block diagram to show a prior art structure of communication system using a communications satellite and terrestrial lines, for transmitting and receiving digital information, which is disclosed in Japanese Patent Application Laid Open Hei 7-143181. In Fig. 1, reference numeral 1 denotes a transmitting connection unit and reference numerals 2, 2, ··· denote a plurality of receiving connection units. Reference numeral 11 denotes a central station LAN and reference numerals 22, 22, ··· denote a plurality of substation LANs. Reference numeral 12 denotes a transmitter and reference numerals 21, 21, ··· denote a plurality of receivers. Reference numerals 13, 13, ··· denote a plurality of terrestrial lines and reference numeral 41 denotes a communications satellite.

The transmitting connection unit 1 is connected to the central station LAN 11, and to this central station LAN 11, a digital video server is connected. A plurality of receiving connection units 2, 2, ··· are connected to the substation LANs 22, 22, ···, respectively, and to respective these substation LANs 22, 22, ···, a plurality of video terminals are connected. An output signal from the transmitting connection unit 1 is given to the transmitter 12, being modulated therein, and transmitted to the receivers 21, 21, ··· through the communications satellite 41. Received signals demodulated in the receivers 21, 21, ··· are given to the receiving connection units 2, 2, ···, respectively. Respective the receiving connection units 2, 2, ··· distribute the received information to the video terminals through the substation LAN. Further, bidirectional terrestrial lines 13, 13, ··· are provided between the transmitting connection unit 1 and the receiving connection units 2, 2, ···, respectively, through which signals are bidirectionally transmitted. A switching operation of the transmitting connection unit 1 allows selection as to whether the output signal is transmitted through the communications satellite 41 or the terrestrial lines 13, 13, ···.

Next, an operation will be discussed.

Fig. 2 is a flowchart to show a switching operation of the transmitting connection unit 1. In Fig. 2, reference sign Ss represents a transmission time by the communications satellite 41 and reference sign Si represents a transmission time by the terrestrial lines 13, 13, ···. Further, Fig. 5 is an explanatory drawing to show a general frame structure of packet which is handled as a unit of communication. The packet consists of a packet header portion P1 and a data portion P2. The packet header portion P1 includes various information needed for a packet communication, e.g., a source address Pla, destination address P1b, a packet length Plc and the like.

Information from the digital video server connected to the central station LAN 11 is transferred to the transmitting connection unit 1 as a packet having the frame structure, e.g., as shown in Fig. 5. The transmitting connection unit 1 has switching means (not shown) therein and selects one of transmission route through the communications satellite 41 or the terrestrial lines 13, 13, ···, depending on a predetermined condition, on the basis of amount of information to be transmitted, type of communication, i.e., broadcast communication or one-to-one communication, availability of lines and the like.

When a packet is input (Step ST1), the switching means judges whether the packet is for broadcast communication or not by means of the destination address thereof (Step ST2). If the packet is for broadcast communication, the packet is output to the communications satellite 41 (Step ST6). On the other hand, if the packet is not for broadcast communication, the transmission time Ss by the communications satellite and the transmission time Si by the terrestrial line are calculated respectively (Step ST3), and the relation between these transmission times, i.e., whether Ss < Si or not, is judged (Step ST4). Then, if it is judged as Ss < Si, it is selected that the packet should be transmitted through the communications satellite 41 (Step ST6). On the other hand, if it is not judged as Ss < Si, it is selected that the packet should be transmitted through the terrestrial lines 13, 13, ··· (Step ST5). Thus, the switching means unconditionally selects satellite communication if the packet is for broadcast communication. Also if the packet is not for broadcast communication, the switching means performs a routing operation for selecting the satellite communication or the terrestrial line communication depending on the transmission time. In both cases, the information transferred to the receiving connection units 2, 2, ··· are eventually transmitted to the video terminals through the substation LANs 22, 22, ···.

In the above described step ST3, the transmission time Ss by the satellite and transmission time Si by the terrestrial line are calculated as follows. It is assumed herein that the amount of untransmitted data in a satellite buffer is Bs, the amount of untransmitted data in a terrestrial-line buffer is Bi, the transmission capacity and the amount of transmission delays in the satellite 41 are Rs and Ts, respectively, and the transmission capacity and the amount of transmission delays in the terrestrial lines 13, 13, ··· are Ri and Ti, respectively. The transmission times Ss and Si for transmitting the input packet to the receiving side through the satellite 41 and the terrestrial lines 13, 13, ··· are expressed as below, respectively:

$$Ss = (P + Bs) / Rs + Ts \quad (1)$$

$$Si = (P + Bi) / Ri + Ti \quad (2)$$

Since the selective communication system in prior art has the above-discussed structure, even if a selective communication system of communications satellite / terrestrial lines, using a satellite terminal such as VSAT which performs communications directly to the satellite, is desired to build, the VSAT terminal having only a satellite interface is only connected to a closed satellite network and not connected to a general terrestrial network, and therefore it is disadvantageously found useless. Further, as to the means for switching the communications satellite and the terrestrial lines in the system in the prior art, the terrestrial network and the satellite network employ individual ones. Therefore, it is disadvantageously difficult to apply the system in the prior art to a case of constructing a network in which three types of terminals, i.e., a terrestrial terminal, a satellite terminal and a satellite / terrestrial terminal which allows communications by both satellite and terrestrial lines.

Though the system in the prior art uses the transmission time as selection criterion for the transmission route of signals, it does not take other conditions, e.g., communication cost, the quality of lines depending on weather or the like, into consideration. Further, in the system in the prior art, "broadcast communication" refers to a transmission to all the terminals, and when broadcast communication is achieved, the satellite communication is unconditionally selected. There is a problem, however, that the system in the prior art does not consider a signal transmission route and a switching method in a case of group broadcast communication where the number of destinations of broadcast information takes an intermediate value, ranging from 2 to (the number of all terminals - 1).

The present invention is intended to solve the above problems, and an object of the present invention is to provide a selective communication system of communications satellite / terrestrial lines in which three types of terminals, i.e., terrestrial terminals, satellite terminals and satellite /terrestrial terminals are available.

Further, another object of the present invention is to provide a selective communication system of communications satellite / terrestrial lines which allows a group broadcast communication and selection of transmission route for broadcast communication in consideration of not only transmission time but also communication cost, the quality of lines and the like.

Disclosure of Invention

A selective communication system of communications satellite / terrestrial lines according to the present invention is characterized by that an output signal from the switchboard is transmitted to the satellite terminal, the satellite /terrestrial terminal and / or the terrestrial terminal through the communications satellite and / or the terrestrial lines, with a transmission route selected by the switchboard on the basis of destination included in the output signal, identifying information whether it is broadcast communication or one-to-one communication and the like, and predetermined judgment condition for transmission route.

By this arrangement it makes possible to construct a communications system including various kind of terminals, which judges the information of destination terminals to select an appropriate transmission route and perform an appropriate transmission, and further produces an effect of selecting a more advantageous transmission route not only based on whether the data to be transmitted are for broadcast communication or one-to-one communication but also based on predetermined judgment condition for transmission route.

In the selective communication system of communications satellite/terrestrial lines according to the present invention, the switchboard judges first whether the destination includes the terrestrial terminal or not, judges second whether the destination includes the satellite terminal or not, judges third whether it is broadcast communication or one-to-one communication, and judges fourth both of the transmission times for the communications satellite and the terrestrial lines, to select and change the transmission route of output signal through the communications satellite or the terrestrial lines.

By this arrangement there is produced an effect of transmitting a packet through an advantageous route in consideration of the transmission times of communications satellite and the terrestrial lines when the data for group broadcast communication are included. Further, in a system including a small number of satellite terminals, there are some cases where the transmission delay is reduced by transmission through the terrestrial lines even if the data are for full broadcast communication, and the switchboard performing this procedure can be advantageously applied to the cases.

In the selective communication system of communications satellite / terrestrial lines according to the present invention, the switchboard judges first whether the destination includes the terrestrial terminal or not, judges second whether the destination includes the satellite terminal or not, and judges third whether the transmission time by the terrestrial lines is longer than the transmission time by the communications satellite, to select and change the transmission route of output signal through the communications satellite or the terrestrial lines.

In the selective communication system of communications satellite / terrestrial lines according to the present invention, the switchboard judges first whether the destination includes the terrestrial terminal or not, judges second whether the destination includes the satellite terminal or not, and judges third whether the cost for the terrestrial lines corresponding to the number of destinations of broadcast communication data, exceeds the communication cost for the communications satellite or not, to select and change the transmission route of output signal through the communications satellite or the terrestrial lines.

By these arrangements they produce an effect of transmitting data through a transmission system which has an advantage in communication cost depending on the number of destinations, in a case of group broadcast communication or a case of full broadcast communication in a system including a small number of satellite / terrestrial terminals.

In the selective communication system of communications satellite / terrestrial lines according to the present invention, the switchboard judges first whether the destination includes the terrestrial terminal or not, judges second whether the destination includes the satellite terminal or not, judges third whether it is broadcast communication or one-to-one communication, judges fourth both of the transmission times for the communications satellite and the terrestrial lines, and judges fifth whether the bit error rate of communications by the communications satellite falls within a predetermined allowance or not, to select and change the transmission route of the output signal through the communications satellite or the terrestrial lines.

By this arrangement it produces an effect of selecting a transmission route in consideration of the quality of lines by means that a transmission through the terrestrial lines is selected even after judgment that the transmission delay is smaller in transmission through the communications satellite when the bit error rate of satellite line exceeds a predetermined allowance.

In the selective communication system of communications satellite / terrestrial lines according to the present invention, the judgment condition for transmission route is a bifurcation point where the communication cost for the terrestrial lines corresponding to the number of destinations of broadcast communication data is equivalent to the communication cost for the communications satellite.

By this arrangement it produces an effect of selecting a transmission through a transmission system having an advantage in communication cost depending on a number of destinations.

In the selective communication system of communications satellite / terrestrial lines according to the present invention, the judgment condition for transmission route is a predetermined allowance for the bit error rate of communications by the communications satellite.

By this arrangement it produces an effect of selecting a transmission route in consideration of the quality of lines because the transmission route can be selected and changed from the satellite lines to the terrestrial lines when the bit error rate of satellite line exceeds the allowance even if it is intended to perform a transmission through the communications satellite.

In the selective communication system of communications satellite/terrestrial lines according to the present invention, the judgment condition for transmission route is a predetermined value of frequency of request for repetition from the satellite terminal.

By this arrangement it produces an effect of selecting a transmission route in consideration of the quality of lines because the transmission route can be changed from the satellite lines to the terrestrial lines when the number of requests for repetition in the satellite line exceeds a predetermined value of allowance even if it is intended to perform a transmission through the communications satellite.

Thus, the selective communication system of communications satellite / terrestrial lines according to the present invention has an integrated system structure including various types of terminals and can select and change an transmission route in accordance with conditions and circumstances of the information to be transmitted. In recent years, with diversification of communication means, it is required to properly use the communication means in accordance with purposes, contents and use of the information, and as a proposition satisfying the requirement, active use and contribution of the present invention is greatly expected.

Brief Description of Drawings

Fig. 1 is a block diagram to show a structure of communication system in the prior art;

Fig. 2 is a flowchart to show a prior art operating procedure;

Fig. 3 is a block diagram to show an outline of selective communication system of communications satellite / terrestrial line in accordance with the present invention;

Fig. 4 is a flowchart to show an operating procedure in accordance with a first preferred embodiment of the present invention;

Fig. 5 is an explanatory drawing to show a frame structure of packet;

Fig. 6 is a graph to show the relation on a communication cost;

Fig. 7 is a flowchart to show an operating procedure in accordance with a second preferred embodiment of the present invention;

Fig. 8 is a flowchart to show an operating procedure in accordance with a third preferred embodiment of the present invention; and

Fig. 9 is a flowchart to show an operating procedure in accordance with a fourth preferred embodiment of the present invention.

Best Mode for Carrying out the Invention

For more detailed description of the present invention, the best mode for carrying out the present invention will be discussed below with reference to attached drawings.

The First Preferred Embodiment

Fig. 3 is a block diagram to show an outline of selective communication system of communications satellite / terrestrial lines in accordance with a first preferred embodiment of the present invention. In Fig. 3, reference numeral 3 denotes a satellite communication hub station and reference numeral 4 denotes a communications satellite. Reference numerals 5, 5, ··· denote a plurality of satellite terminals, reference numerals 6, 6, ··· denote a plurality of satellite / terrestrial terminals and reference numerals 7, 7, ··· denote a plurality of terrestrial terminals. Reference numeral 8 denotes a switchboard and reference numeral 9 denotes a network connected to the switchboard 8. Reference numerals 61, 61, ··· and 71, 71, ··· denote terrestrial lines.

The term satellite communication hub station means a center for performing a transmission / receive with the satellite terminals 5, 5, ··· and the satellite / terrestrial terminals 6, 6, ··· through the communications satellite 4. The satellite terminals 5, 5, ··· are terminals each having an interface for a route of transmission / receive through the communications satellite 4. The satellite / terrestrial terminals 6, 6, ··· are terminals each having an interface for a route of transmission / receive through the communications satellite 4 and that for a route of transmission / receive through the terrestrial lines 61, 61, ···. Further, the terrestrial terminals 7, 7, ··· are terminals each having an interface for a route of transmission / receive through the terrestrial lines 71, 71, ···.

The satellite communication hub station 3 is connected to the switchboard 8 and the switchboard 8 is connected to the network 9 in a central station for exchanging data to be transmitted. The satellite terminals 5, 5, ··· and the satellite / terrestrial terminals 6, 6, ··· are connected to the satellite communication hub station 3 through the communications satellite 4. The satellite / terrestrial terminals 6, 6, ··· and the terrestrial terminals 7, 7, ··· are connected to the switchboard 8 through the terrestrial lines 61, 61, ··· and 71, 71, ···.

Next, an operation will be discussed.

Fig. 4 is a flowchart to show an operating procedure for selecting the transmission route in the switchboard 8. In the destination address P1b of packet header portion P1 shown in Fig. 5, one type of or a plurality of types of destination address of terminals are designated depending on data attached to the packet.

Packets having information data of broadcast communication or one-to-one communication with destination information, e.g., the satellite terminals 5, 5, ···, the satellite / terrestrial terminals 6, 6, and the terrestrial terminals 7, 7, ··· are sequentially input from the network 9 to the switchboard 8 (Step ST41). It is judged first whether the destination address P1b includes the terrestrial terminals 7, 7, ··· or not as the destination of input packet (Step ST42), and when it is included, the packet is taken out and transmitted to the terrestrial terminals 7, 7, ··· through the terrestrial lines 71, 71, ··· (Step ST43). In the step ST43, when the packet also includes the destination other than the terrestrial terminals 7, 7, ··· together, the packet goes to the same step as the packet which is judged not to include the destination of terrestrial terminals 7, 7, ··· in the step ST42 goes, as well as being transmitted to the terrestrial terminals 7, 7, ···. Specifically, it is judged whether the destination address P1b includes the satellite terminals 5, 5, ··· or not (Step ST44). In the step ST44, when the destination address P1b includes the satellite terminals 5, 5, ···, even if the destination address P1b also includes the satellite / terrestrial terminals 6, 6, ···, the packet is transmitted to the satellite terminals 5, 5, ··· and the satellite / terrestrial terminals 6, 6, ··· through the communications satellite 4 (Step ST49). When it is judged, however, that the destination address P1b does not include the satellite terminals 5, 5, ··· in the step ST44, ···, in other words, the destination address P1b of packet include only the satellite / terrestrial terminals 6, 6, ···, the same procedure as in the earlier-discussed system in the prior art are performed. Specifically, it is judged whether the packet is for broadcast communication or one-to-one communication, (Step ST45), and if the information of packet is broadcast communication, the packet is output to the communications satellite 4 and transmitted to the satellite / terrestrial terminals 6, 6, ··· (Step ST49). On the other hand, if the information of packet is one-to-one communication, the transmission time Ss by the communications satellite and the transmission time Si by the terrestrial lines are calculated (Step ST46), and the transmission times Ss and Si are compared with each other (Step ST47). If $Ss < Si$, the packet is transmitted to the satellite / terrestrial terminals 6, 6, ··· through the communications satellite 4 (Step ST49), and if not $Ss < Si$, the packet is transmitted to the satellite / terrestrial terminals 6, 6, ··· through the terrestrial lines 61, 61, ··· (Step ST48).

As is obvious from the above discussion, in the first preferred embodiment constructed is an integrated communications system in which three types of terminals, i.e., the satellite terminals, the satellite / terrestrial terminals and the terrestrial terminals are available to utilize the communications satellite and the terrestrial lines, and the communications system produces an effect of selecting a transmission route to perform an appropriate transmission by judging the information of destination terminals. Further, the communications system judges whether the data to be transmitted is for broadcast communication or one-to-one communication, and when the data are for one-to-one communication, the communications system can effectively select a transmission route having an advantage in transmission time.

The Second Preferred Embodiment

In the second preferred embodiment, discussion will be made on a transmission method in a case where information of group broadcast communication is included with reference to Figs. 3, 5 and 7.

In a case of group broadcast communication, the number of terminals as destination in a unit of group are smaller, taking an intermediate arbitrary value ranging from 2 to (the number of all terminals - 1). When the number of terminals is smaller, the transmission time by communications satellite becomes shorter, and there are some cases where the order of superiority in transmission time are counterchanged between the transmissions by the terrestrial lines and the communications satellite. Therefore, it is preferable that an advantageous transmission route should be selected for transmitting data by calculating the transmission time.

When the group broadcast communication is performed, it can be judged whether group broadcast communication or not by writing a group name into the destination address P1b of packet header portion P1 shown in Fig. 5. For example, if the destination address P1b has 16 bits, it is determined to judge "full broadcast communication" if the first 2 bits are "00", judge "group broadcast communication" if "01" and judge "one-to-one communication" if "11". It is only necessary to first check the first 2 bits for judgment.

An operating procedure of the switchboard 8 will be discussed with reference to the flowchart of Fig. 7.

Packets having information data of broadcast communication (including group broadcast communication) or one-to-one communication with destination information, e.g., the satellite terminals 5, 5, ···, the satellite / terrestrial terminals 6, 6, ··· and the terrestrial terminals 7, 7, ··· are sequentially input from the network 9 to the switchboard 8 (Step ST71). It is judged first whether the destination address P1b includes the terrestrial terminals 7, 7, or not as the destination of input packet (Step ST72), and when it is included, the packet is taken out and transmitted to the terrestrial terminals 7, 7, ··· through the terrestrial lines 71, 71, ··· (Step ST73). In the step ST73, when the packet also includes the destination other than the terrestrial terminals 7, 7, ··· together, the packet goes to the same step as the packet which is judged not to include the destination of terrestrial terminals 7, 7, ··· in the step ST72 goes, as well as being transmitted to the terrestrial terminals 7, 7, ···. Specifically, it is judged whether the destination address P1b includes the satellite terminals 5, 5, ··· or not (Step ST74). In the step ST74, when the destination address P1b includes the satellite terminals 5, 5, ···, even if the destination address P1b also includes the satellite / terrestrial terminals 6, 6, ···, the packet is transmitted to the satellite terminals 5, 5, ··· and the satellite / terrestrial terminals 6, 6, ··· through the communications satellite 4 (Step ST78). When it is judged, however, that the destination address P1b does not include the satellite terminals 5, 5, ··· in the step ST74, ···, if the information of packet is group broadcast communication or one-to-one communication, the transmission time Ss by the communications satellite and the transmission time Si by the terrestrial lines are calculated (Step ST75), and the transmission times Ss and Si are compared with each other (Step ST76). If Ss<Si, the packet is transmitted to the satellite / terrestrial terminals 6, 6, ··· through the communications satellite 4 (Step ST78), and if not Ss < Si, the packet is transmitted to the satellite / terrestrial terminals 6, 6, ··· through the terrestrial lines 61, 61, ··· (Step ST77).

Thus, according to the second preferred embodiment it produces an effect of performing a packet transmission through an advantageous route in consideration of the transmission times by the communications satellite and the terrestrial lines when the information data of group broadcast communication is included. Further, in a system including a small number of satellite terminals 5, 5, ···, there are some cases where the transmission delay is reduced by transmission through the terrestrial lines even if the data are for full broadcast communication, and the switchboard performing this procedure can effectively perform a transmission.

The Third Preferred Embodiment

In the third preferred embodiment, discussion will be made on a transmission method in consideration of communication cost in a case where information of group broadcast communication is included with reference to Figs. 3, 5, 6 and 8.

In the second preferred embodiment as above described, the transmission times are calculated to determine whether the transmission is performed through the terrestrial lines or the communications satellite when all the remaining destinations are the satellite / terrestrial terminals 6, 6, ··· in the last step. In an actual case, however, there is a possibility that the communication cost is regarded as more important than the transmission time.

Fig. 6 is a graph to show a relation between the number of destinations of broadcast information and the communication cost. From Fig. 6, it is found that the communication cost is constant regardless of the number of destinations in the case of satellite communication. On the other hand, in the case of terrestrial line communication, the communication cost becomes cheaper when the number of destinations is small, but as the number of destinations increases, the communication cost increases in proportion to the number. In contrast to the case of satellite communication, the bifurcation point in communication cost of the terrestrial line communication is indicated by x. Therefore, it is understood that with the bifurcation point x as a criterion, the transmission route should be selected.

The number of destinations can be detected by counting the destinations in the destination address P1b of packet header portion P1 shown in Fig. 5 or inserting the number of destinations together with the information indicating the group broadcast communication in advance. As alternative method, numerals indicating areas or groups before the terminal numbers are designated like the area numbers of telephone service, and then in response to a command of transmission to all the designated numbers, the switchboard can count a number of the data of terminal number associated with the designated number that the switchboard contains therein.

The transmission in consideration of communication cost can be achieved by a method in accordance with the third preferred embodiment, in other words, through the steps in the procedure shown in the flowchart of Fig. 8.

Packets having information data of broadcast communication (including group broadcast communication) or one-to-one communication with destination information, e.g., the satellite terminals 5, 5, ···, the satellite / terrestrial terminals 6, 6, ··· and the terrestrial terminals 7, 7, ··· are sequentially input from the network 9 to the switchboard 8 (Step ST81). The switchboard 8 operates as follows. It is judged first whether the destination address P1b includes the terrestrial terminals 7, 7, ··· or not as the destination of input packet (Step ST82), and when it is included, the packet is taken out and transmitted to the terrestrial terminals 7, 7, ··· through the terrestrial lines 71, 71, ··· (Step ST83). In the step ST83, when the packet also includes the destination other than the terrestrial terminals 7, 7, ··· together, the packet goes to the same step as the packet which is judged not to include the destination of terrestrial terminals 7, 7, ··· in the step ST82 goes, as well as being transmitted to the terrestrial terminals 7, 7, ···. Specifically, it is judged whether the destination address P1b includes the satellite terminals 5, 5, ··· or not (Step ST84). In the step ST84, when the destination address P1b includes the satellite terminals 5, 5, ···, even if the destination address P1b also includes the satellite / terrestrial terminals 6, 6, ···, the packet is transmitted to the satellite terminals 5, 5, ··· and the satellite / terrestrial terminals 6, 6, ··· through the communications satellite 4 (Step ST87). When it is judged, however, that the destination address P1b does not include the satellite terminals 5, 5, in the step ST84, ···, if the information of packet is group broadcast communication or one-to-one communication, the number of destinations is compared with the value of bifurcation point x shown in Fig. 6 (Step ST85). If the information of packet is group broadcast communication in the step ST85, the number of destinations in the destination address P1b is detected. If it is j judged that "the number of destinations <x", the information packet is transmitted to the satellite / terrestrial terminals 6, 6, ··· through the terrestrial lines 61, 61, ··· (Step ST86). On the other hand, if it is not judged that "the number of destinations < x", the packet is transmitted to the satellite / terrestrial terminals 6, 6, ··· through the communications satellite 4 (Step ST87). Further, if the information of packet is one-to-one communication, the packet is naturally transmitted to the satellite / terrestrial terminals 6, 6, ··· through the terrestrial lines 61, 61, ···.

Thus, according to the third preferred embodiment it produces an effect of transmitting the information data through an advantageous transmission / receive system in communication cost depending on the number of destinations, in other words, properly using the transmission / receive system, in the case of group broadcast communication or the case of full broadcast communication in a system including a small number of satellite / terrestrial terminals 6, 6, ···.

The Fourth Preferred Embodiment

There is a case where the quality of lines is deteriorated due to rains depending on bands. In the system in the prior art regarding the quality of lines as very important, the deterioration in quality of lines is solved by retransmission, but additional steps for the retransmission are needed and the transmission time increases in some cases. Then, in the fourth preferred embodiment it is proposed a method of selecting a transmission route in consideration of quality of lines, besides the function of first preferred embodiment.

The fourth preferred embodiment will be discussed with reference to Figs. 3, 5 and 9. The operating procedure of switchboard 8 will be discussed according to the flowchart shown in Fig. 9.

Packets having information data of broadcast communication or one-to-one communication with destination information, e.g., the satellite terminals 5, 5, ···, the satellite / terrestrial terminals 6, 6, ··· and the terrestrial terminals 7, 7, ··· are sequentially input from the network 9 to the switchboard 8 (Step ST91). It is judged first whether the destination address P1b includes the terrestrial terminals 7, 7, ··· or not as the destination of input packet (Step ST92), and when it is included, the packet is taken out and transmitted to the terrestrial terminals 7, 7, ··· through the terrestrial lines 71, 71, ··· (Step ST93). In the step ST93, when the packet also includes the destination other than the terrestrial terminals 7, 7, ··· together, the packet goes to the same step as the packet which is judged not to include the destination of terrestrial terminals 7, 7, ··· in the step ST92 goes, as well as being transmitted to the terrestrial terminals 7, 7, ···. Specifically, it is judged whether the destination address P1b includes the satellite terminals 5, 5, or not (Step ST94). In the step ST94, when the destination address P1b includes the satellite terminals 5, 5, ···, even if the destination address P1b also includes the satellite / terrestrial terminals 6, 6, ···, the packet is next subjected to the process of step ST98. On the other hand, when the destination address P1b does not include the satellite terminals 5, 5 ··· , in other words, when the packet is destined only for the satellite / terrestrial terminals 6, 6, ···, it is judged whether the packet is for full broadcast communication, group broadcast communication or one-to-one communication (Step ST95). If the packet is for full broadcast communication, the packet is next subjected to the process of step ST 98. If the packet is for group broadcast communication or one-to-one communication, the transmission time Ss by the communications satellite and the transmission time Si by the terrestrial lines are respectively calculated (Step ST96), and the transmission times Ss and Si are compared with each other (Step ST97). If Ss < Si, the packet is next subjected to the process of step ST 98. If not Ss < Si, the packet is transmitted to the satellite / terrestrial terminals 6, 6, through the terrestrial lines 61, 61, ··· (Step ST99). Further, if the information of packet is one-to-one communication, the packet is similarly transmitted to the satellite / terrestrial terminals 6, 6, ··· through the terrestrial lines 61, 61, ···.

Next, in the step ST 98, it is judged whether the bit error rate (hereinafter it is referred to as "BER") of satellite line is larger or smaller than the allowance. If "BER < allowance", the packet is transmitted to the satellite terminals 5, 5, ··· or the satellite / terrestrial terminals 6, 6, ··· through the communications satellite 4, depending on the destination (Step ST100). On the other hand, if not "BER < allowance" , the packet is transmitted to the satellite / terrestrial terminals 6, 6, ··· through the terrestrial lines 61, 61, ··· (Step ST99).

In this case, since the satellite terminal such as VSAT usually always measures BER and an average of the measured values is sent to the satellite communication hub station at regular time intervals, the quality of lines can be judged by using these information.

Thus, according to the fourth preferred embodiment it allows a transmission through the terrestrial lines, even after judgment that the transmission delay is smaller in transmission through the communications satellite, when BER of the satellite line exceeds the allowance, to produce an effect of selecting a transmission route in consideration of the quality of lines.

Further, the number of requests for repetition from the satellite terminal may be utilized as another judgment means for the quality of lines. The satellite communication hub station side counts a number of the requests for repetition sent from the satellite terminals and judges the quality of lines from whether the number of requests for repetition exceeds a predetermined value or not.

Though several preferred embodiments of the present invention have been discussed, no discussion has been made on transmission of signals from the terminals to the switchboard as key station through the communications satellite or the terrestrial lines. The transmission is omitted since this is generally well known and is not considered to directly affect understanding and implementation of the present invention.

Further, though discussions have been made taking the packet communication as an example in the above preferred embodiments, it can be understood that the present invention can be applied to a transmission of signals in any form other than packet.

## Claims

1. A selective communication system of communications satellite / terrestrial lines having a structure in which three kinds of respective terminals of

    a plurality of satellite / terrestrial terminals each having both interfaces for a satellite system and a terrestrial system;

    a plurality of satellite terminals each having an interface only for a satellite system; and

    a plurality of terrestrial terminals each having an interface only for a terrestrial system, exist,

    input / output signals of said satellite / terrestrial terminal and said satellite terminal are connected to a switchboard through a communications satellite and a satellite communication hub station, and

    input / output signals of said satellite / terrestrial terminal and said terrestrial terminal are connected to said switchboard through respective terrestrial lines, wherein

    an output signal from said switchboard is transmitted to said satellite terminal, said satellite / terrestrial terminal and / or said terrestrial terminal through said communications satellite and / or said terrestrial lines, with a transmission route selected by said switchboard on the basis of destination included in said output signal, identifying information whether it is broadcast communication or one-to-one communication and the like, and predetermined judgment condition for transmission route.

2. The selective communication system of communications satellite / terrestrial lines according to claim 1, wherein said switchboard judges first whether said destination includes said terrestrial terminal or not, judges second whether said destination includes said satellite terminal or not, judges third whether it is broadcast communication or one-to-one communication, and judges fourth both of the transmission times for said communications satellite and said terrestrial lines, to select and change said transmission route of said output signal through said communications satellite or said terrestrial lines.

3. The selective communication system of communications satellite / terrestrial lines according to claim 1, wherein said switchboard judges first whether said destination includes said terrestrial terminal or not, judges second whether said destination includes said satellite terminal or not, and judges third whether said transmission time by said terrestrial lines is longer than said transmission time by said communications satellite, to select and change said transmission route of said output signal through said communications satellite or said terrestrial lines.

**4.** The selective communication system of communications satellite / terrestrial lines according to claim 1, wherein said switchboard judges first whether said destination includes said terrestrial terminal or not, judges second whether said destination includes said satellite terminal or not, and judges third whether the cost for said terrestrial lines corresponding to the number of destinations of broadcast communication data, exceeds the communication cost for said communications satellite or not, to select and change said transmission route of said output signal through said communications satellite or said terrestrial lines.

**5.** The selective communication system of communications satellite / terrestrial lines according to claim 1, wherein said switchboard judges first whether said destination includes said terrestrial terminal or not, judges second whether said destination includes said satellite terminal or not, judges third whether it is broadcast communication or one-to-one communication, judges fourth both of the transmission times for said communications satellite and said terrestrial lines, and judges fifth whether the bit error rate of communications by said communications satellite falls within a predetermined allowance or not, to select and change said transmission route of said output signal through said communications satellite or said terrestrial lines.

**6.** The selective communication system of communications satellite / terrestrial lines according to claim 1, wherein said judgment condition for transmission route is a bifurcation point where the communication cost for said terrestrial lines corresponding to the number of destinations of broadcast communication data is equivalent to the communication cost for said communications satellite.

**7.** The selective communication system of communications satellite / terrestrial lines according to claim 2, wherein said judgment condition for transmission route is a predetermined allowance for the bit error rate of communications by said communications satellite.

**8.** The selective communication system of communications satellite / terrestrial lines according to claim 2, wherein said judgment condition for transmission route is a predetermined value of frequency of request for repetition from said satellite terminal.

FIG.1

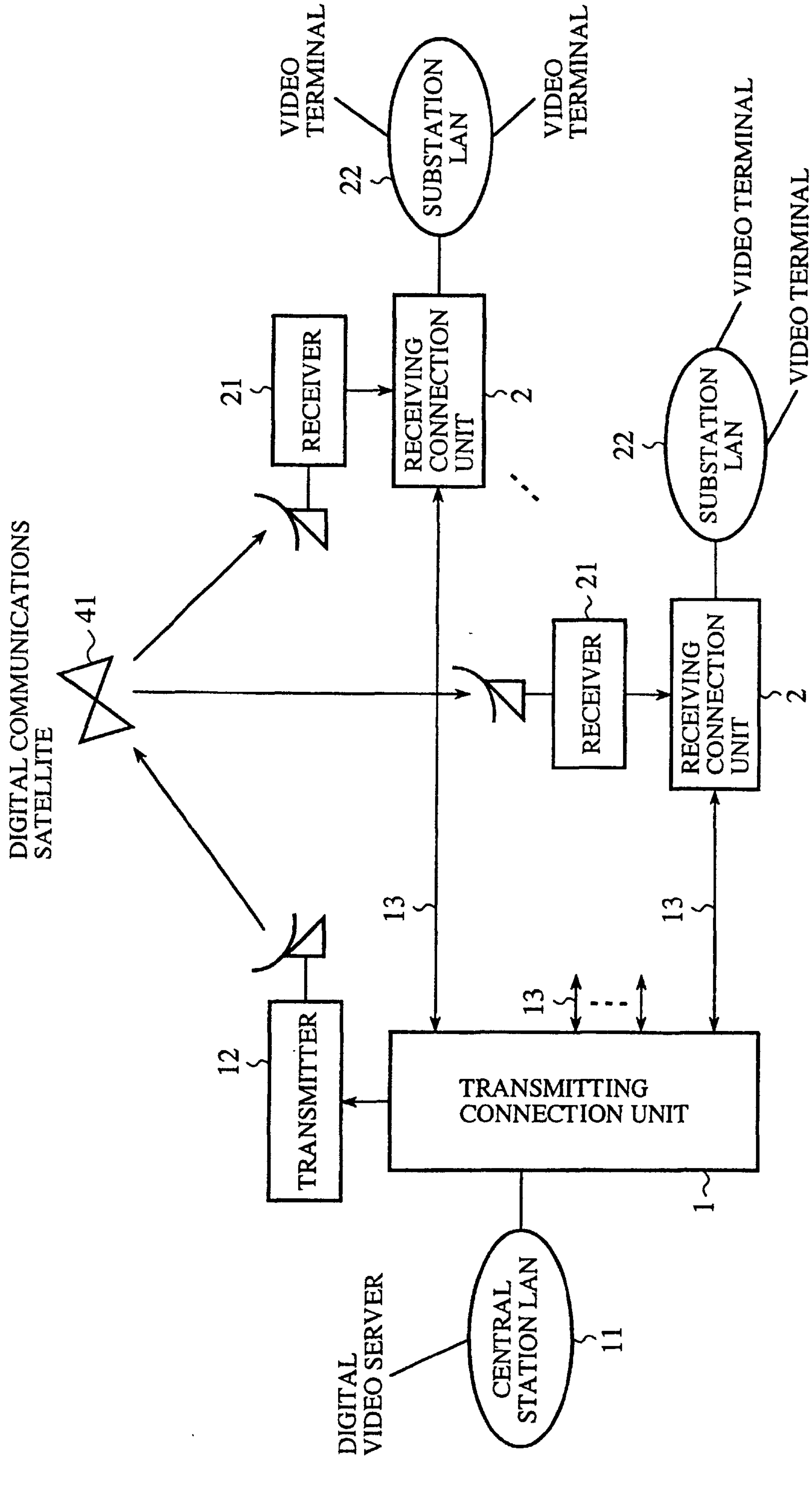
DIGITAL COMMUNICATIONS SATELLITE
41
RECEIVER
21
RECEIVING CONNECTION UNIT
2
SUBSTATION LAN
22
VIDEO TERMINAL
VIDEO TERMINAL
RECEIVER
21
RECEIVING CONNECTION UNIT
2
SUBSTATION LAN
22
VIDEO TERMINAL
VIDEO TERMINAL
TRANSMITTER
12
TRANSMITTING CONNECTION UNIT
1
13
13
13
CENTRAL STATION LAN
11
DIGITAL VIDEO SERVER

FIG.2

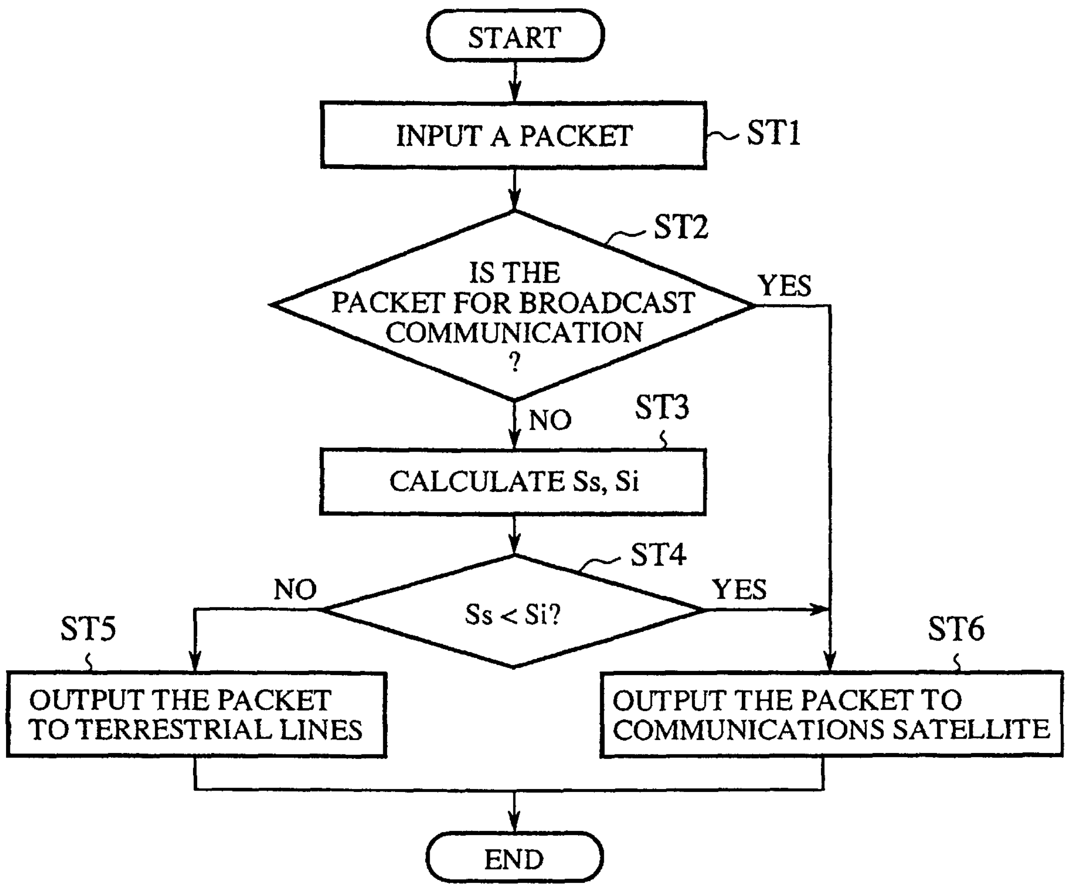
START
INPUT A PACKET
ST1
IS THE PACKET FOR BROADCAST COMMUNICATION ?
ST2
YES
NO
ST3
CALCULATE Ss, Si
ST4
NO
YES
Ss < Si?
ST5
ST6
OUTPUT THE PACKET TO TERRESTRIAL LINES
OUTPUT THE PACKET TO COMMUNICATIONS SATELLITE
END

FIG.6

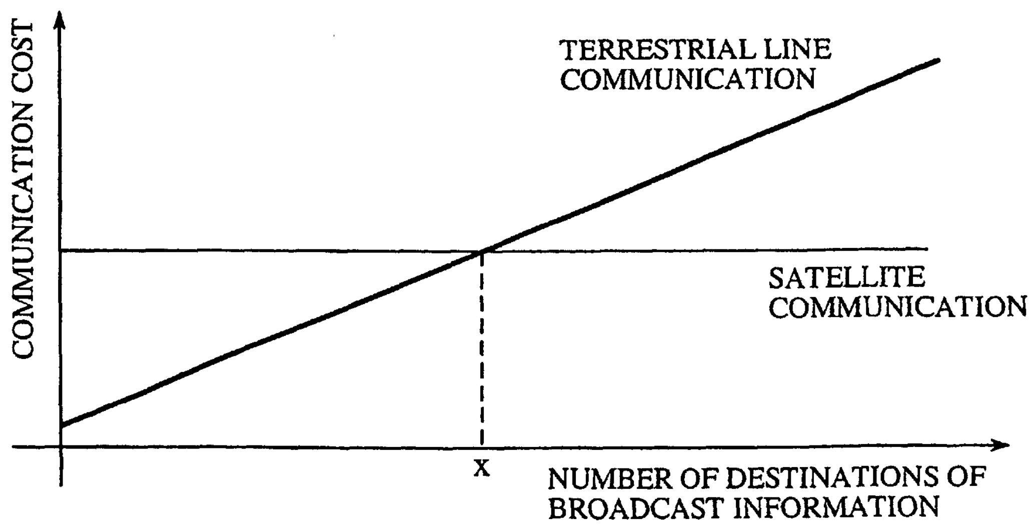
COMMUNICATION COST
TERRESTRIAL LINE COMMUNICATION
SATELLITE COMMUNICATION
X
NUMBER OF DESTINATIONS OF BROADCAST INFORMATION

FIG.3

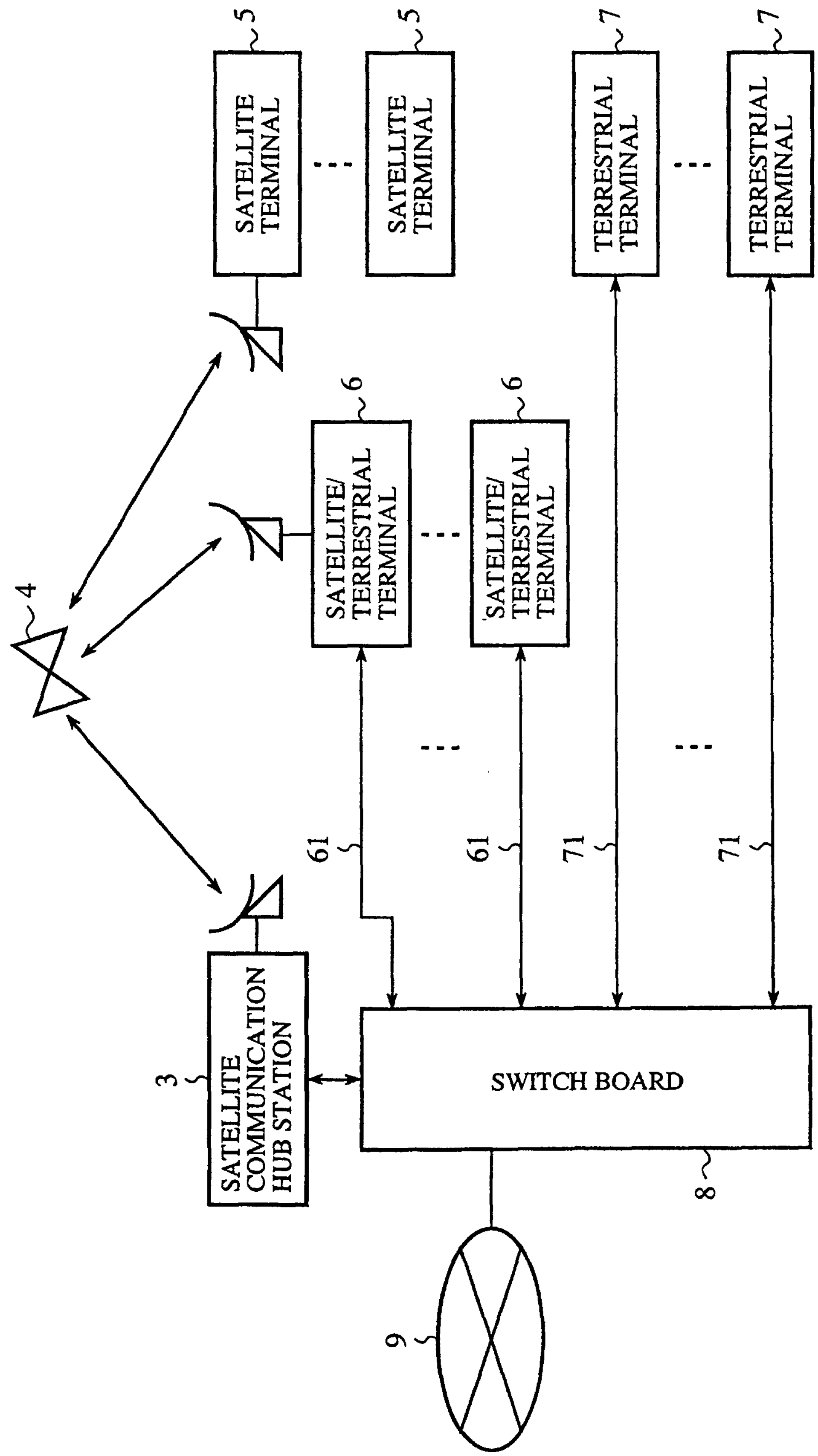
SATELLITE TERMINAL
SATELLITE TERMINAL
TERRESTRIAL TERMINAL
TERRESTRIAL TERMINAL
SATELLITE/ TERRESTRIAL TERMINAL
SATELLITE/ TERRESTRIAL TERMINAL
SATELLITE COMMUNICATION HUB STATION
SWITCH BOARD
3
4
5
6
7
8
9
61
71

FIG.4

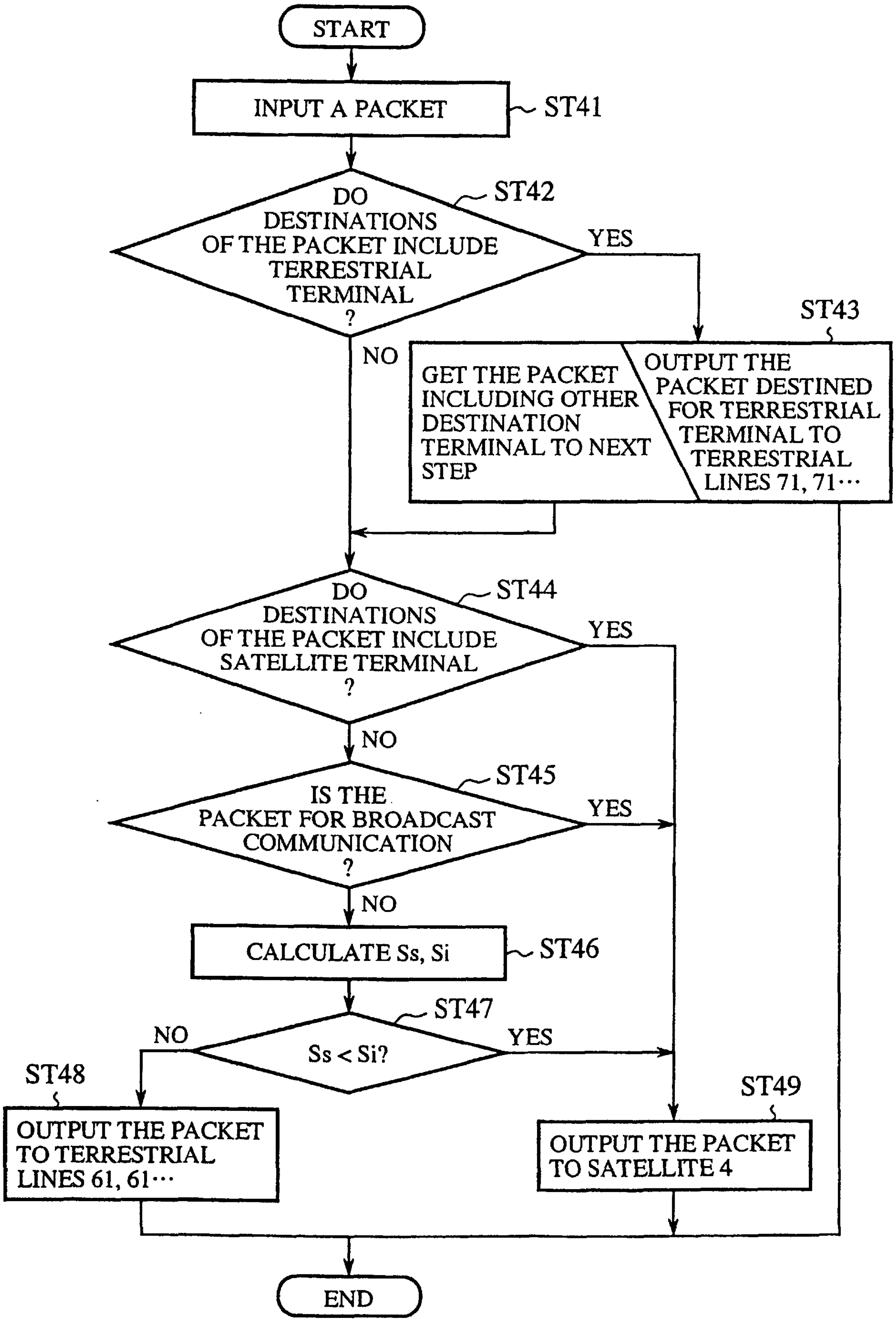
START
INPUT A PACKET
ST41
DO DESTINATIONS OF THE PACKET INCLUDE TERRESTRIAL TERMINAL ?
ST42
YES
NO
ST43
GET THE PACKET INCLUDING OTHER DESTINATION TERMINAL TO NEXT STEP
OUTPUT THE PACKET DESTINED FOR TERRESTRIAL TERMINAL TO TERRESTRIAL LINES 71, 71···
DO DESTINATIONS OF THE PACKET INCLUDE SATELLITE TERMINAL ?
ST44
YES
NO
IS THE PACKET FOR BROADCAST COMMUNICATION ?
ST45
YES
NO
CALCULATE Ss, Si
ST46
Ss < Si?
ST47
NO
YES
ST48
OUTPUT THE PACKET TO TERRESTRIAL LINES 61, 61···
ST49
OUTPUT THE PACKET TO SATELLITE 4
END

FIG.5

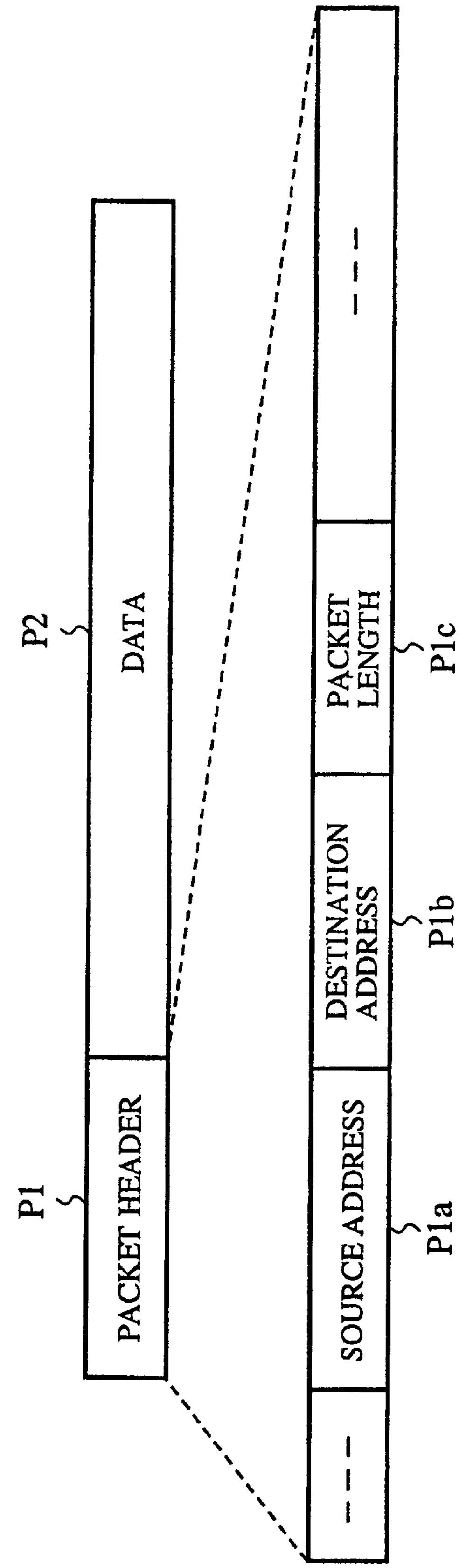
P1
PACKET HEADER
P2
DATA
SOURCE ADDRESS
P1a
DESTINATION ADDRESS
P1b
PACKET LENGTH
P1c

FIG.7

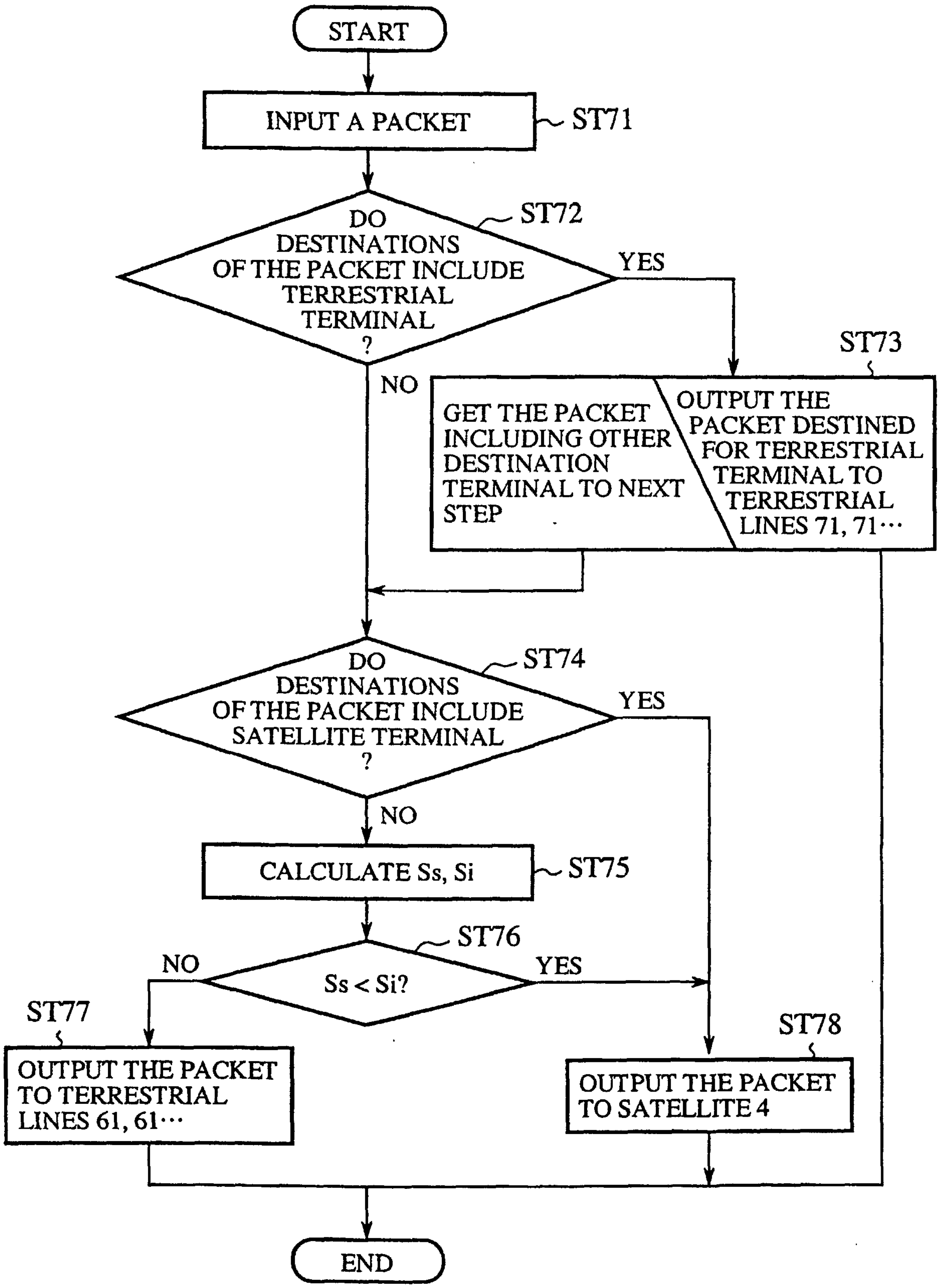
START
INPUT A PACKET
ST71
DO DESTINATIONS OF THE PACKET INCLUDE TERRESTRIAL TERMINAL ?
ST72
YES
NO
ST73
GET THE PACKET INCLUDING OTHER DESTINATION TERMINAL TO NEXT STEP
OUTPUT THE PACKET DESTINED FOR TERRESTRIAL TERMINAL TO TERRESTRIAL LINES 71, 71···
DO DESTINATIONS OF THE PACKET INCLUDE SATELLITE TERMINAL ?
ST74
YES
NO
CALCULATE Ss, Si
ST75
Ss < Si?
ST76
NO
YES
ST77
OUTPUT THE PACKET TO TERRESTRIAL LINES 61, 61···
ST78
OUTPUT THE PACKET TO SATELLITE 4
END

FIG.8

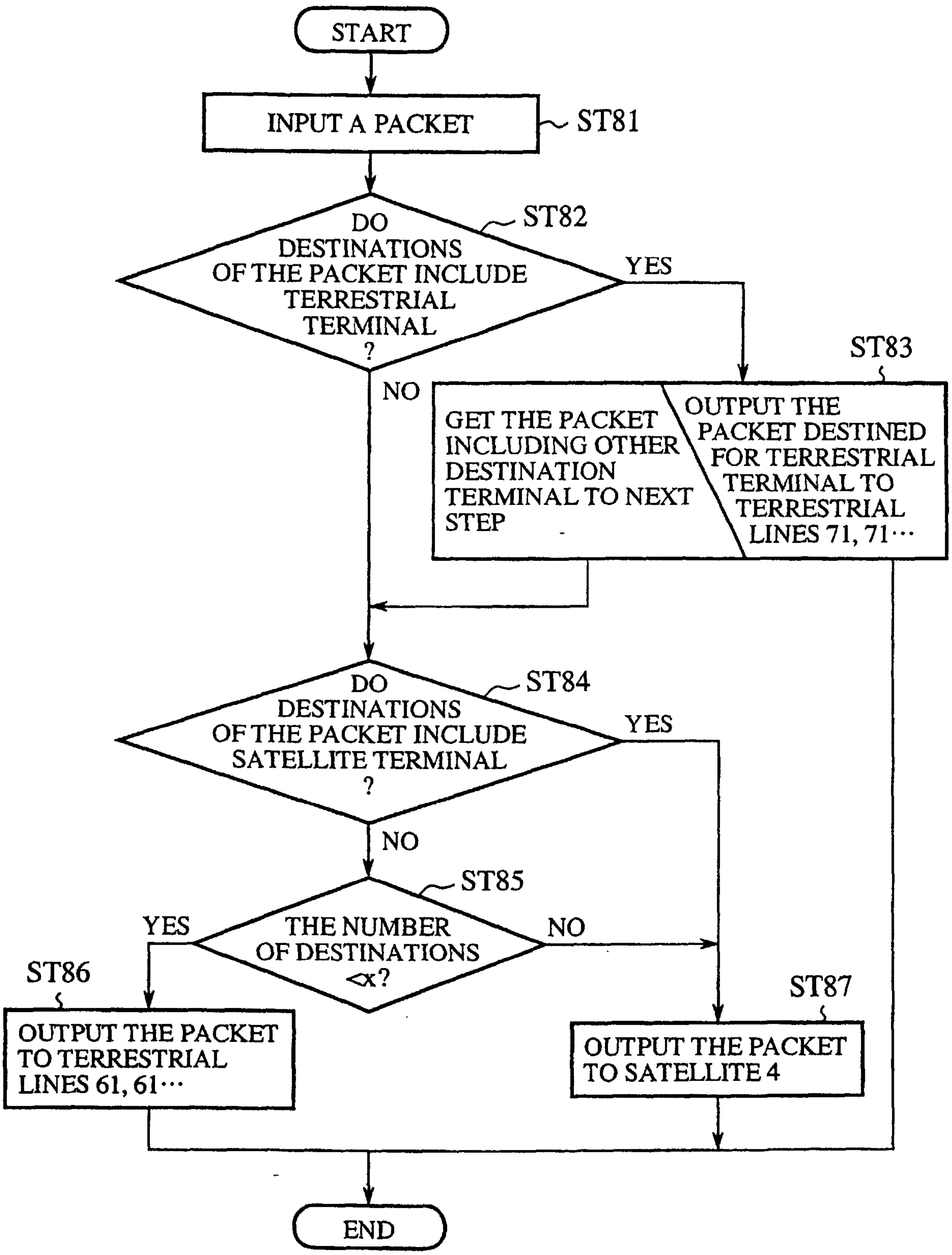
START
INPUT A PACKET
ST81
DO DESTINATIONS OF THE PACKET INCLUDE TERRESTRIAL TERMINAL ?
ST82
YES
NO
ST83
GET THE PACKET INCLUDING OTHER DESTINATION TERMINAL TO NEXT STEP
OUTPUT THE PACKET DESTINED FOR TERRESTRIAL TERMINAL TO TERRESTRIAL LINES 71, 71···
DO DESTINATIONS OF THE PACKET INCLUDE SATELLITE TERMINAL ?
ST84
YES
NO
ST85
THE NUMBER OF DESTINATIONS <x?
YES
NO
ST86
OUTPUT THE PACKET TO TERRESTRIAL LINES 61, 61···
ST87
OUTPUT THE PACKET TO SATELLITE 4
END

FIG.9

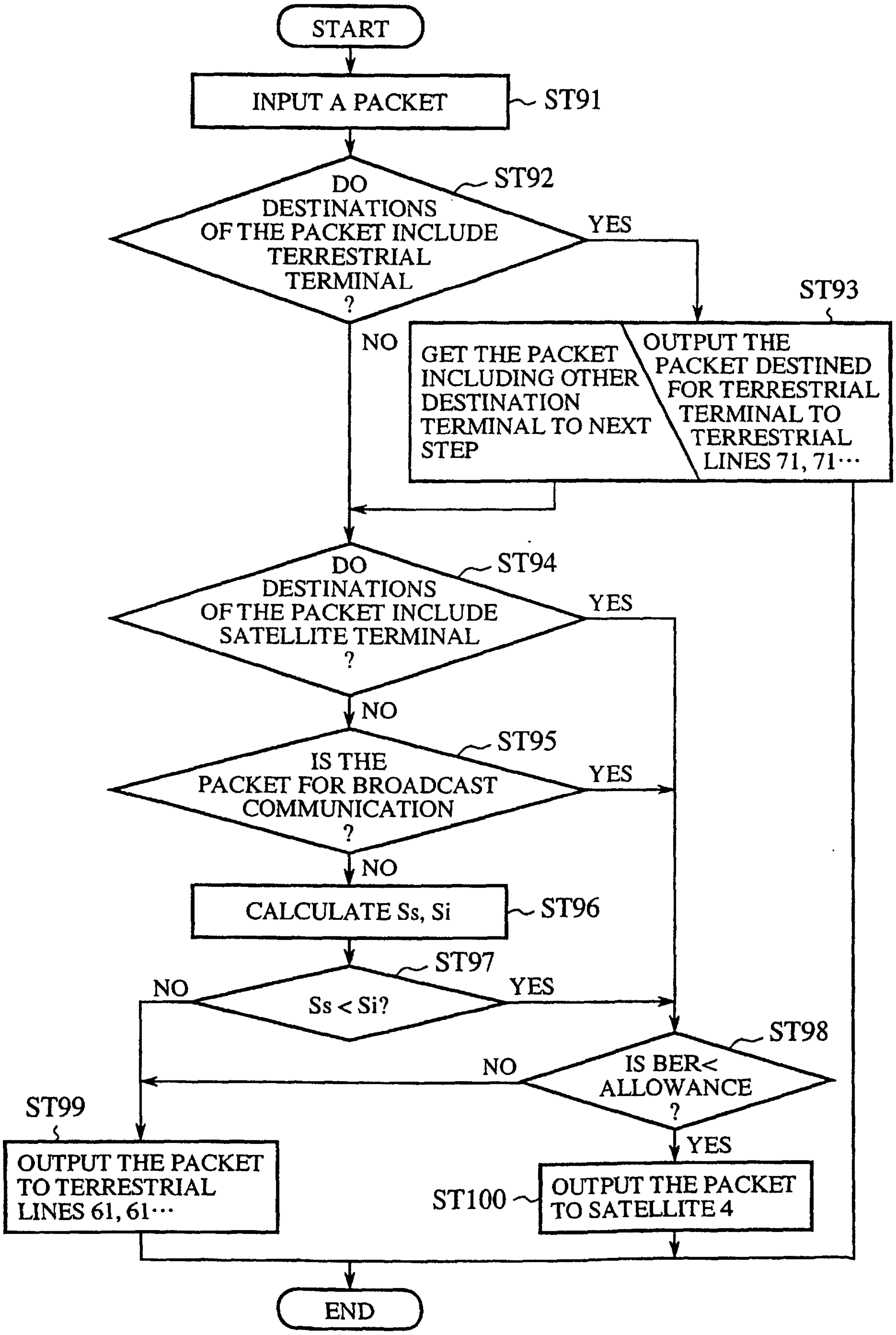
START
INPUT A PACKET
ST91
DO DESTINATIONS OF THE PACKET INCLUDE TERRESTRIAL TERMINAL ?
ST92
YES
NO
ST93
GET THE PACKET INCLUDING OTHER DESTINATION TERMINAL TO NEXT STEP
OUTPUT THE PACKET DESTINED FOR TERRESTRIAL TERMINAL TO TERRESTRIAL LINES 71, 71···
DO DESTINATIONS OF THE PACKET INCLUDE SATELLITE TERMINAL ?
ST94
YES
NO
IS THE PACKET FOR BROADCAST COMMUNICATION ?
ST95
YES
NO
CALCULATE Ss, Si
ST96
Ss < Si?
ST97
NO
YES
IS BER< ALLOWANCE ?
ST98
NO
YES
ST99
OUTPUT THE PACKET TO TERRESTRIAL LINES 61, 61···
ST100
OUTPUT THE PACKET TO SATELLITE 4
END

## INTERNATIONAL SEARCH REPORT

International application No.
PCT/JP00/09051

A. CLASSIFICATION OF SUBJECT MATTER
Int.Cl$^7$ H04B7/15

According to International Patent Classification (IPC) or to both national classification and IPC

B. FIELDS SEARCHED

Minimum documentation searched (classification system followed by classification symbols)
Int.Cl$^7$ H04B7/14-7/22

Documentation searched other than minimum documentation to the extent that such documents are included in the fields searched
Jitsuyo Shinan Koho 1922-1996 Toroku Jitsuyo Shinan Koho 1994-2001
Kokai Jitsuyo Shinan Koho 1971-2001 Jitsuyo Shinan Toroku Koho 1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP, 7-143181, A (Nippon Telegr. & Teleph. Corp. <NTT>), 02 June, 1995 (02.06.95) (Family: none) | 1-3<br>5,7,8<br>4,6 |
| Y | JP, 8-223101, A (Fujitsu Limited), 30 August, 1996 (30.08.96) (Family: none) | 5,7 |
| Y | JP, 6-252896, A (NRI & NCC Co., Ltd.), 09 September, 1994 (09.09.94) (Family: none) | 8 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 March, 2001 (19.03.01) | 03 April, 2001 (03.04.01) |
| Name and mailing address of the ISA/<br>Japanese Patent Office | Authorized officer |
| Facsimile No. | Telephone No. |

Form PCT/ISA/210 (second sheet) (July 1992)